# EUROPÄISCHE PATENTSCHRIFT

(11) **EP 3 475 481 B1**
(45) Veröffentlichungstag und Bekanntmachung des Hinweises auf die Patenterteilung: **31.03.2021**
(21) Anmeldenummer: 17732758.2
(22) Anmeldetag: 30.05.2017
(51) Int. Cl.: D21F 7/08, D21F 7/10, D21F 1/00

(54) **BESPANNUNG FÜR EINE MASCHINE ZUR HERSTELLUNG EINER FASERBAHN UND VERFAHREN ZUR HERSTELLUNG EINER DERARTIGEN BESPANNUNG**
FABRIC FOR A MACHINE FOR PRODUCING A FIBROUS WEB AND METHOD FOR PRODUCING SUCH A FABRIC
TOILE POUR UNE MACHINE DE FABRICATION D'UNE BANDE DE MATÉRIAU FIBREUX ET PROCÉDÉ DE FABRICATION D'UNE TELLE TOILE

(30) Priorität: 28.06.2016 DE 102016111769
(43) Veröffentlichungstag der Anmeldung: 01.05.2019
(73) Patentinhaber: Voith Patent GmbH, 89522 Heidenheim (DE)
(72) Erfinder: MALMQUIST, Johan, 64136 Katrineholm (SE); JOHANSSON, Hans-Jörgen, 64010 Högsjö (SE)
(74) Vertreter: Voith Patent GmbH - Patentabteilung
(86) Internationale Anmeldenummer: PCT/EP2017/062974
(87) Internationale Veröffentlichungsnummer: WO 2018/001668

(56) Entgegenhaltungen:
- WO-A1-2004/055265
- WO-A1-2009/106182
- WO-A1-2013/083468
- US-A1- 2003 207 069
- US-A1- 2009 090 425
- US-A1- 2014 069 549

## Beschreibung

Die Erfindung betrifft eine Bespannung, insbesondere einen Pressfilz, welche in einer Maschine zur Herstellung und/oder Veredelung einer Papier-, Karton- oder Tissuebahn Anwendung findet, sowie von einem Verfahren zur Herstellung einer solchen Bespannung.

In einer Pressenpartie einer Papier-, Karton- oder Tissuemaschine sind Bespannungen in Form von Pressfilzen im Einsatz, welche unter anderem der Aufnahme von Wasser dienen, welches aus der jungen Faserbahn in einem oder mehreren Pressspalten durch Druck herausgepresst wird. Die Pressfilze sind dabei einerseits einer Vielzahl von Belastungen ausgesetzt, andererseits werden hohe Anforderungen an ihre Eigenschaften in Bezug auf Markierungsneigung, Entwässerungsvermögen, Rückstellvermögen und Einlaufverhalten gestellt.

Gewöhnlich weisen derartige Pressfilze eine lastaufnehmende Grundstruktur, eine oder mehrere Stapelfaserlagen sowie zusätzlich eine oder mehrere Funktionslagen auf, die aufeinander angeordnet und miteinander verbunden werden. Die Funktionslagen können dabei z.B. Folien oder Membranen enthalten, die mehr oder weniger durchlässig für Gase und Flüssigkeiten sind.

Die Verbindung der Lagen untereinander erfolgt gewöhnlich durch Vernadeln. Hierbei werden die Komponenten in der gewünschten Anzahl und Reihenfolge aufeinander angeordnet und einer Vernadelungsstrecke zugeführt, auf welcher die Fasern der Stapelfaserlagen durch Widerhaken an den Nadeln durch die lastaufnehmende Grundstruktur und die eventuell weiteren Funktionslagen hindurchgezogen werden und die Lagen dadurch aneinander fixiert und verankert werden.

Weiterhin ist es bekannt, zur Vereinfachung der Fertigung Pressfilze aus zwei oder mehreren Lagen einer einfachen lastaufnehmenden Grundstruktur herzustellen, wobei die Grundstruktur als Flachgewebe vorliegt und zumindest einmal auf sich selbst zurückgefaltet und dann zu einer Endlosbespannung an ihren Enden zusammengefügt wird.

Beispielsweise geht aus der WO 2009/106182 A1 eine Bespannung sowie ein Verfahren zu deren Herstellung hervor. Die Bespannung weist ein flachgewebtes Material auf, welches eine Oberseite und eine Unterseite sowie zwei Enden aufweist. Das flachgewebte Material weist zwei Faltlinien auf, an welchen das Material gefaltet und auf sich selbst abgelegt wird. Die Faltlinien sind dabei so angeordnet, dass die Enden des flachgewebten Materials in einem Bereich entfernt von den Faltlinien angeordnet sind. Die Enden sind miteinander verbunden, so dass sich eine endlose schlauchförmige Struktur ergibt, die flachgelegt wird.

Weiterhin zeigt die WO 2013/083468 A1 ein Verfahren zur Herstellung einer Naht für eine Bespannung. Die Bespannung weist Schuss- und Kettfäden auf, die miteinander zu einer Gewebestruktur verwoben sind. Es werden einige Schussfäden aus der Gewebestruktur entfernt und diese dann so auf sich selbst abgelegt, dass im Bereich der entfernten Schussfäden Schlaufen entstehen, die aus den Kettfäden gebildet sind. Die Schlaufen bilden ein Ende der späteren Bespannung. Die Schlaufen werden mit analog gebildeten weiteren Schlaufen am anderen Ende der Gewebestruktur ineinandergelegt und ein Steckdraht eingeführt, so dass die Bespannung endlos gemacht werden kann.

Auch die Schriften US 2009/090425, US 2014/069549, WO 2004/055265 sowie US 2003/207069 zeigen verwandte Bespannungen.

Nachteilig an diesen bekannten Pressfilzen ist dabei insbesondere die Markierungsneigung. Einerseits besteht bei Kombination zweier Gewebelagen durch den sog. Moire-Effekt die Gefahr der Erzeugung unerwünschter Muster in der Faserbahn, andererseits tendiert die Naht dazu, ebenfalls Markierungen in der Faserbahn hervorzurufen, welche durch die im Nahtbereich veränderten Eigenschaften der Bespannung, insbesondere die veränderte Permeabilität und Dicke, hervorgerufen werden.

Es ist entprechend Aufgabe der Erfindung, eine Bespannung anzugeben, welche einerseits einfach herstellbar ist und andererseits die bekannten Nachteile des Standes der Technik vermeidet oder zumindest mildert.

Die Aufgabe wird durch eine Bespannung nach Anspruch 1 und ein Verfahren nach Anspruch 7 gelöst.

Die erfindungsgemäße Bespannung wird einem Stück Flachgewebe hergestellt. Es wird vollständig auf das Zusammensetzen aus einzelnen, mit unterschiedlichen Eigenschaften versehenen Teilstücken verzichtet. Es entfallen aufwändige Arbeitsschritte wie Ablängen, Aufeinanderlegen und Fixieren, was jeweils Fehlerquellen beinhaltet und somit die Qualität der fertigen Bespannung negativ beeinflussen kann. Die erfindungsgemäße Bespannung ist einfach und schnell herstellbar, weist keine überflüssigen Nahtstellen auf und ist dabei sowohl kostengünstig als auch zuverlässig und markierungsarm.

Weitere vorteilhafte Merkmale und Ausführungsformen ergeben sich aus den untergeordneten Ansprüchen.

Bei erfindungsgemäßen Bespannugen bzw. bei Bespannungen, die mittels eines erfindungsgemäßen Verfahrens hergestellt werden, sind die Fäden bei Einsatz der Bespannung in einer Maschine, z.B. einer Papiermaschine üblicherweise so orientiert, dass die Kettfäden des Webstuhls in Maschinenlaufrichtung orientiert sind, während die Schussfäden des Webstuhls in Maschinenquerrichtung verlaufen.

Vorteilhafterweise kann dabei vorgesehen sein, dass zumindest eine weitere unterschiedliche Eigenschaft ausgewählt ist aus: Webmuster, Material der Schussfäden, Materialstärke der Schussfäden und/oder Dichte der Schussfäden. Die genannten Eigenschaften sind durch moderne Techniken im Bereich Weben und Materialauswahl und -zusammenstellung in einfacher und effektiver Weise wählbar und auch kombinierbar.

Gemäß einem vorteilhaften Ausführungsbeispiel kann vorgesehen sein, dass die Stärke der Schussfäden zumindest eines der Abschnitte unterschiedlich zu einer Stärke der Schussfäden zumindest eines anderen der Abschnitte ist. Durch geeignete Auswahl der Materialstärke kann eine weitere Erhöhung des void volume der Bespannung erzielt werden.

Gemäß einem vorteilhaften Ausführungsbeispiel kann das Material der Schussfäden zumindest eines der Abschnitte unterschiedlich zu einem Material der Schussfäden zumindest eines anderen der Abschnitte sein. In Hinsicht auf die Auswahl des Materials kann sowohl das Material der Schussfäden als auch dasjenige der Kettfäden abschnittsweise verändert werden. Letzteres ist insbesondere durch eine abschnittsweise Beschichtung der Kettfäden möglich. Weiterhin können auch die Schussfäden abschnittsweise zusätzlich oder alternativ Beschichtungen aufweisen, die die Eigenschaften abschnittsweise verändern.

Gemäß einem bevorzugten Ausführungsbeispiel kann die Länge des ersten und des dritten Abschnitts weniger als 50cm, bevorzugt weniger als 20 cm, besonders bevorzugt weniger als 5 cm betragen. Je nach Anwendungsfall kann eine andere Länge des Verbindungsbereiches vorteilhaft sein. So können beispielsweise einige Fügeverfahren einen längeren oder kürzeren Verbindungsbereich erfordern, als andere. Insbesondere kann ein kürzerer Verbindungsbereich vorteilhaft sein, wenn dadurch nur ein kleinerer Teil der Bespannung einer Beanspruchung durch das Fügeverfahren ausgesetzt ist.

Die unterschiedliche Länge des Verbindungsbereichs ermöglicht die Nutzung verschiedener Fügeverfahren, die unterschiedliche Schonung ermöglichen.

Weiterhin von Vorteil ist, dass das erfindungsgemäße Verfahren in einem weiteren Schritt das Entfernen der Schussfäden zur Bildung von Nahtschlaufen und zusätzlich weiterhin das Einbringen von Stabilisierungsnähten umfassen kann. Dadurch können in einfacher Weise Nahtschlaufen ohne zusätzliche Verbindungsabschnitte gebildet werden. Die Einbringung von Stabilisierungsnähten kann wirkungsvoll verhindern, dass angrenzende Schussfäden in die Nahtschlaufen einwandern und diese verschließen, bevor ein Steckdraht eingeführt wird. Zudem kann dadurch eine Stabilisierung des nach dem Umschlagen mehrlagigen schlauchartigen Verbundes erzielt werden, wodurch Verrutschen der Lagen aufeinander vermieden werden kann.

Bevorzugte Ausführungsvarianten des erfindungsgemäßen Verfahrens können vorsehen, dass das Miteinanderverbinden des erstens und des dritten Abschnitts durch Kleben, Ultraschallschweißen oder Laserschweißen erfolgt. Derartige Verbindungen zeichnen sich durch hohe Belastbarkeit und Zuverlässigkeit aus, ohne die Permeabilität oder die Wasseraufnahmefähigkeit der Bespannung in diesem Bereich zu beeinträchtigen.

Die Erfindung wird nachfolgend ohne Einschränkung der Allgemeinheit unter Bezugnahme auf die Zeichnungen näher erläutert. In den Zeichnungen zeigen:
- Fig. 1: in einer stark schematisierten Ansicht ein Ausführungsbeispiel eines Flachgewebes zur Herstellung einer erfindungsgemäßen Bespannung,
- Fig. 2: in einer ebenfalls stark schematisierten Ansicht einen längeren Abschnitt eines Flachgewebes,
- Fig. 3: in einer stark schematisierten seitlichen Ansicht ein Ausführungsbeispiel einer Bespannung, das nicht unter den Umfang der Ansprüche fällt, und
- Fig. 4: in einer stark schematisierten seitlichen Ansicht ein Ausführungsbeispiel einer Bespannung gemäß der Erfindung.

Bespannungen werden in Maschinen zur Herstellung oder Veredelung einer Faserbahn wie beispielsweise einer Papier-, Karton- oder Tissuebahn an verschiedenen Positionen eingesetzt. In der Formierpartie, wo die Blattbildung erfolgt, stehen dabei die Anforderungen hinsichtlich der gewünschten Ausrichtung der Fasern und einer effektiven Erstentwässerung im Vordergrund, während in der Pressenpartie einerseits weiteres Wasser entfernt und andererseits die Faserbahn vorgeglättet werden soll. In der Trockenpartie schließlich wird der Trockengehalt der Faserbahn weiter erhöht. Entsprechend werden an die Bespannungen in den unterschiedlichen Positionen unterschiedliche Anforderungen gestellt.

In der Pressenpartie, in welcher die nachstehend beschriebenen Bespannungen zur Anwendung kommen, wird mechanischer Druck durch Walzen auf die Faserbahn sowie die die Faserbahn tragende Bespannung ausgeübt. Weiterhin wird durch Besaugung über Anlegen eines Unterdrucks eine Strömung von Luft und Wasser durch Faserbahn und Bespannung erzeugt, wodurch der Faserbahn Wasser entzogen wird. Hinzu kommt, dass die Bespannung im Betrieb unter Zug steht, was weitere mechanische Belastungen erzeugt. Die entsprechenden mechanischen und hydraulischen Belastungen sowie die Forderung nach einer gleichmäßig vorgeglätteten und bereits weitgehend entwässerten Faserbahn stellen hohe Anforderungen an die Bespannung.

Um die weiter oben erwähnte Markierungsneigung der Naht zu vermeiden, ist es bekannt, Bespannungen in Rundwebmaschinen herzustellen. Dies ist jedoch eine sehr aufwändige und damit teure Form der Herstellung, die zudem Einschränkungen in Bezug auf die herstellbaren Längen und Breiten aufweist. Flachgewebte Strukturen, welche durch Vernahten endlos gemacht werden, haben sich gegenüber rundgewebten Bespannungen aufgrund leichterer Herstellbarkeit und flexibleren Maßen durchgesetzt.

In Weiterbildung des bereits seit längerem bekannten Konzeptes, eine Bespannung mit einem einfachen Webmuster schnell und günstig als Flachgewebe herzustellen und sowohl die Funktionalität als auch die Naht durch Falten und Endlosmachen des Flachgewebes durch nachfolgende Verfahrensschritte zu erzielen, wird nun vorgeschlagen, das Flachgewebe so herzustellen, dass in Maschinenrichtung aufeinanderfolgende Abschnitte bereits bei der Herstellung mit unterschiedlichen Eigenschaften ausgebildet werden.

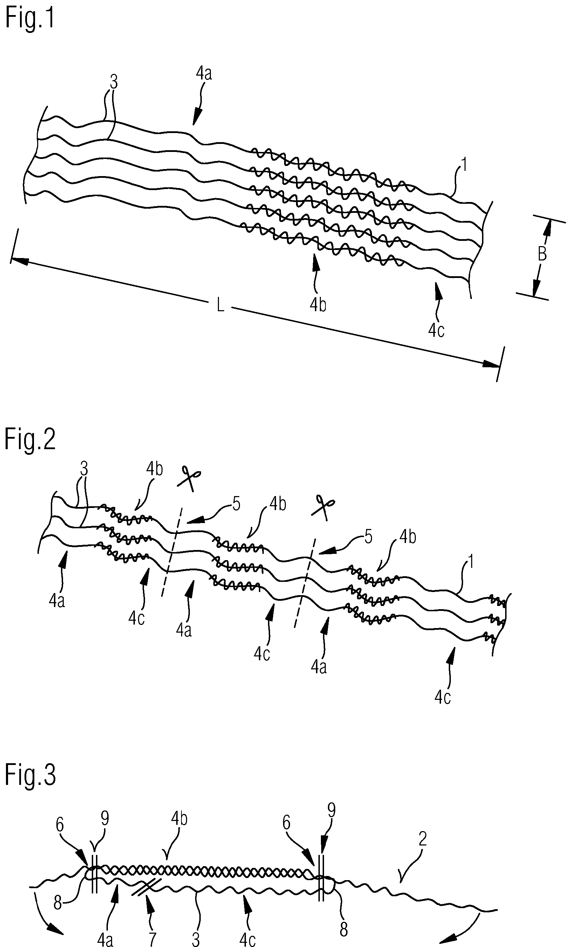

In Fig. 1 ist stark schematisiert ein Teilstück eines Flachgewebes 1 zur Herstellung einer Bespannung 2 dargestellt. Das Flachgewebe 1 kann dabei in beliebiger Breite B hergestellt werden, die für verschiedene Breiten einer Faserbahnmaschine angepasst sein kann. Heutzutage sind Arbeitsbreiten bis zu 11m keine Seltenheit. Das Flachgewebe 1 wird auf entsprechenden, ebenfalls bekannten Webmaschinen in hinreichender Breite erzeugt. Die Breite B wird dabei durch die Anzahl nebeneinanderliegender Kettfäden 3 in der Webmaschine bestimmt. Sie bilden in der späteren Bespannung 2 die lastaufnehmende, in Maschinenrichtung orientierte Struktur. Die Kettfäden 3 werden von in Fig. 1 aus Gründen der Übersichtlichkeit nicht weiter dargestellten Schussfäden gekreuzt, welche in einem Winkel von etwa 90° zur Richtung der Kettfäden 3 eingebracht werden und die Kettfäden 3 in einem vorher festgelegten Muster wechselweise über- und unterqueren. Eine detaillierte Erläuterung des Vorgangs der Herstellung eines derartigen Flachgewebes 1 beispielsweise in Leinwand-, Köper- oder Atlasbindung kann an dieser Stelle entfallen, da entsprechende Verfahren bereits seit langem bekannt sind. Eine Länge L des Flachgewebes 1 kann beliebig ausgeführt werden und ist nur durch die Länge der Kettfäden 3 begrenzt. Das Flachgewebe 1 kann in Form von Rollenware 1 aufgewickelt werden und steht dann für die Weiterverarbeitung zur Verfügung. Es ist jedoch auch möglich, das Flachgewebe 1 direkt nach dem Auslaufen aus der Webmaschine abzulängen und ohne Aufwickeln sofort dem nächsten Verarbeitungsschritt zuzuführen.

Aus Fig. 1 ist ersichtlich, dass das Flachgewebe 1 erfindungsgemäß mehrere Abschnitte aufweist, welche unterschiedliche Lagenanzahl aufweisen. So liegt in einem ersten Abschnitt 4a ein einlagiges Gewebe vor, in einem an den ersten Abschnitt 4a anschließenden zweiten Abschnitt 4b liegt ein zweilagiges Gewebe vor, und in einem an den zweiten Abschnitt 4b anschließenden dritten Abschnitt 4c liegt wiederum ein einlagiges Gewebe vor. Je nach Ausgestaltung und Anforderungen an die später durch Endlosmachen herzustellende Bespannung 2 können dabei insbesondere die Webmuster des ersten Abschnitts 4a und des dritten Abschnitts 4c gleich sein.

Weiterhin ist es auch möglich, nicht nur die Anzahl der Lagen des Flachgewebes 1, sondern auch weitere, insbesondere das Wasseraufnahmevermögen der Bespannung 2 beeinflussende Eigenschaften der Bespannung 2 in den Abschnitten unterschiedlich auszubilden. So kann neben dem Wechsel der Anzahl der Gewebelagen auch das Webmuster pro Abschnitt unterschiedlich ausgebildet sein. In dem in Fig. 1 dargestellten Ausführungsbeispiel der Erfindung ist in dem zweiten Abschnitt 4b das Flachgewebe 1 zweilagig ausgebildet. Die eigentlichen Webmuster, also die Abfolge der Kreuzungen zwischen Kettfäden 3 und Schussfäden, können dabei in den drei Abschnitten 4a, 4b und 4c gleich oder unterschiedlich sein, wobei sie bevorzugt in den Abschnitten 4a und 4c stets gleich ist.

Eine weitere Möglichkeit besteht darin, die verwendeten Materialien abschnittsweise zu variieren. Mit Materialien können hier sowohl das eigentliche Material der Fäden als auch Beschichtungen der Kett- und/oder Schussfäden bezeichnet werden. So ist es beispielsweise möglich, die Kettfäden 3 über die gesamte Länge des Flachgewebes 1 gleich zu belassen, während für die Schussfäden in den verschiedenen Abschnitten 4a, 4b und 4c verschiedene Materialien verwendet werden können. Als Materialien kommen alle in der Herstellung von Papiermaschinenbespannungen oder anderen technischen Geweben üblichen Materialien wie z.B. PA 6, PA 6.6, PA 6.12, PET, PPS, PBT, PE, PP, etc. bzw. Mischungen Kombinationen davon -in Frage. Bei der Herstellung des Flachgewebes 1 kann somit in dem ersten Abschnitt 4a ein erstes Material für die Schussfäden verwendet werden, in dem zweiten Abschnitt 4b kommt ein zweites Material, welches sich von dem Material des ersten Abschnitts 4a unterscheidet, zum Einsatz, und in dem dritten Abschnitt 4c wird wiederum ein anderes Material verwendet, welches sich von demjenigen des zweiten Abschnitts 4b unterscheidet. Die Materialien des ersten Abschnitts 4a und des dritten Abschnitts 4c sind dabei vorzugsweise gleich. Des Weiteren ist denkbar, die Kettfäden 3 im Bereich des zweiten Abschnitts 4b mit einer Beschichtung zu versehen und alle anderen Eigenschaften gleich zu lassen. Alternativ oder zusätzlich können die Schussfäden beschichtet sein. Es können beispielsweise hydrophobe, hydrophile oder schmutzabweisende Beschichtungen vorgesehen sein, welche je nach Anforderungen ausgewählt werden können.

Ebenso ist es denkbar, die Dicke der Schussfäden in den einzelnen Abschnitten 4-zu variieren, so dass im ersten und dritten Abschnitt 4a, 4c Schussfäden mit einer ersten Dicke Verwendung finden, während im zweiten Abschnitt 4b Schussfäden einer zweiten Dicke, die von der ersten verschieden ist, eingebracht werden. Die Dicke der Schussfäden im zweiten Abschnitt 4b kann dabei insbesondere größer als in den anderen Abschnitten 4a, 4c sein. Es können hier weiterhin verzwirnte oder verdrillte Schüsse aus mehreren einzelnen Fäden, Bändchenware oder andere geeignete textile Strukturen eingewebt werden.

Die oben beschriebenen Maßnahmen können beliebig kombiniert werden, um eine weitere Verstärkung der veränderten Eigenschaften der einzelnen Abschnitte zu bewirken.

In Fig. 2 ist in ähnlicher Weise wie in Fig. 1 ein Teilstück des Flachgewebes 1 dargestellt. In Fig. 2 sind nun mehrere der in Fig. 1 dargestellten Abschnittsabfolgen 4a, 4b und 4c gezeigt. Dies dient der besseren Verständlichkeit in Bezug auf die weiter unten näher beschriebene Herstellung einer Bespannung 2 aus dem Flachgewebe 1.

Betrachtet man Fig. 2 von links nach rechts, folgen jeweils Abschnitte mit unterschiedlichen Eigenschaften aufeinander, wobei sich die Anzahl der Lagen wie oben beschrieben ändert. Zunächst ist ein Abschnitt 4a gezeigt, auf welchen ein erster zweilagiger Abschnitt 4b folgt. An diesen schließt ein Abschnitt 4c an, welcher gleichzeitig in Bezug auf den nächstfolgenden zweiten Abschnitt 4b den führenden Abschnitt 4a bildet. Diese Abfolge wiederholt sich über die gesamte Länge des Flachgewebes 1.

Die Länge einer Abschnittsabfolge 4a, 4b, 4c ist dabei durch die Länge der späteren Bespannung 2 bestimmt, wie weiter unten näher erläutert wird. Es ist dabei selbstverständlich möglich, eine Abschnittsabfolge 4a, 4b, 4c in einer bestimmten Länge für eine erste Bespannung 2 zu weben und die nächste Abschnittsabfolge 4a, 4b, 4c in einer anderen Länge herzustellen, welche für eine zweite Bespannung 2 in einer von der der ersten Bespannung 2 abweichenden Länge geeignet ist.

In Fig. 2 ist bereits vorgreifend auf Fig. 3 dargestellt, dass das Flachgewebe 1 entlang von Schnittlinien 5 zur weiteren Verarbeitung zu einer Bespannung 2 abgeschnitten wird. Dadurch entstehen Teilstücke, welche jeweils eine Abschnittsabfolge 4a, 4b, 4c umfassen, wobei die Länge in Maschinenrichtung gemäß einer ersten Ausführungsform so bemessen sein sollte, dass die Abschnitte 4a und 4c zusammen mindestens so lang sind wie der Abschnitt 4b. Es kann auch eine gewisse Überlappung vorgesehen sein, so dass die Länge der Abschnitte 4a und 4c gemeinsam die Länge des Abschnitts 4b um 0 - 5%, bevorzugt um etwa 3%, übersteigt, so dass eine Verbindung Stoß auf Stoß oder durch Übereinanderlegen der Enden oder durch Verschränken der Enden der Kettfäden 3 möglich ist.

Dies ist mit Blick auf Fig. 3 zu verstehen, in welcher eine stark schematisierte seitliche Ansicht einer Bespannung 2 dargestellt ist, welche aus dem in den Fig. 1 und 2 dargestellten Flachgewebe 1 gefertigt ist.

Die Bespannung 2 besteht in dem in Fig. 3 dargestellten Ausführungsbeispiel aus einem Teilstück des Flachgewebes 1, welches entlang der Schnittlinien 5 von dem Flachgewebe 1 abgetrennt wurde. Somit liegt dann ein Teilstück umfassend einen ersten Abschnitt 4a mit erstem Webmuster, erster Lagenanzahl, usw. vor, an welchen ersten Abschnitt 4a ein zweiter Abschnitt 4b mit zweitem Webmuster, zweiter Lagenanzahl usw. anschließt, gefolgt von einem dritten Abschnitt 4c mit drittem Webmuster, dritter Lagenanzahl usw. Webmuster, Lagenanzahl usw. des dritten Abschnitts 4c entspricht dabei dem Webmuster, der Lagenanzahl usw. des ersten Abschnitts 4a.

Das Teilstück des Flachgewebes 1 wird nun an Übergangsstellen 6, welche den Übergang zwischen dem ersten Abschnitt 4a und dem zweiten Abschnitt 4b sowie zwischen dem zweiten Abschnitt 4b und dem dritten Abschnitt 4c bilden, umgeschlagen. Dabei werden die Abschnitte 4a und 4c auf dem Abschnitt 4b abgelegt. Enden 7 der Abschnitte 4a und 4c berühren sich zumindest oder überlappen sich ein Stück, wie weiter oben erwähnt. Diese Enden 7 werden durch einen geeigneten Verbindungsvorgang wie beispielsweise Ultraschall- oder Laserschweißen oder einen anderen hierfür geeigneten Fügevorgang wie beispielsweise Kleben, welcher per se bekannt sein kann, miteinander Stoß an Stoß oder überlappend verbunden.

Es ist somit eine Struktur entstanden, welche schlauchartig ausgebildet ist und nach dem Flachlegen über ihre Länge gesehen vollständig mehrlagig ausgebildet ist, ohne dass wie im Stand der Technik mehrere einzelne Gewebelagen mit gleichem Webmuster kombiniert werden, so dass einerseits der bekannte störende Moire-Effekt vermieden und andererseits die Herstellung der Bespannung 2 erheblich vereinfacht werden kann. Die Enden 7 des Flachgewebes 1 liegen vorzugsweise nicht mittig, sondern auf eine der Übergangsstellen 6 hin verschoben unter dem Abschnitt 4b und werden, da sie im Betrieb auf der Faserbahnmaschine an der Walze und nicht an der Faserbahn anliegen, durch den Abschnitt 4b verdeckt, wodurch die Markierungsneigung der an den Enden 7 gebildeten Naht verringert wird. Schließlich ist die Mehrlagigkeit in dem Abschnitt 4b in Verbindung mit den darunterliegenden Abschnitten 4a, 4c eine wirkungsvolle Möglichkeit, das auch als void volume bezeichnete Flüssigkeitsaufnahmevermögen der Bespannung 2 zu erhöhen.

Die Struktur kann nun so weiterbearbeitet werden, dass an ihren in Maschinenrichtung orientierten Enden Nahtschlaufen 8 hergestellt werden. Hierzu werden einzelne Schussfäden an den Übergangsstellen 6 aus dem Gewebe gezogen, bis Nahtschlaufen 8 entstehen, welche ineinandergelegt werden und durch einen Steckdraht verbunden werden können, um so die endgültige Bespannung 2 herzustellen. Im Bereich der Nahtschlaufen 8 können Stabilisierungsnähte 9 angebracht werden, welche dafür sorgen, dass die nächsten Schussfäden, welche direkt an die Nahtschlaufen 8 angrenzen, nicht in die Nahtschlaufen 8 einwandern und so das Einbringen eines Steckdrahtes zum Endlosmachen der Bespannung 2 erschweren oder verhindern. Durch die Stabilisierungsnähte 9 wird zudem die Bespannung 2 im Ganzen stabilisiert, so dass die schlauchförmige Struktur nicht mehr verrutschen kann. In Positionen, die wenig Zugspannung auf die Bespannung 2 ausüben, wie beispielsweise im Bereich der Tissueherstellung, kann eventuell durch Einbringung der Stabilisierungsnähte 9 die Verbindung der Enden 7 sogar entfallen, was wiederum sowohl die Markierungsneigung als auch den Fertigungsaufwand verringert.

Mittels weniger Herstellungsschritte ist nunmehr aus einem endlosen Flachgewebe 1 in einfacher Weise eine zumindest zweilagige Struktur entstanden, die durch Einbringen eines Steckdrahtes endlos gemacht werden kann. Die Bespannung 2 kann somit in einfacher Weise in jede Maschine eingezogen werden, ohne dass Cantilever-Bauteile notwendig sind.

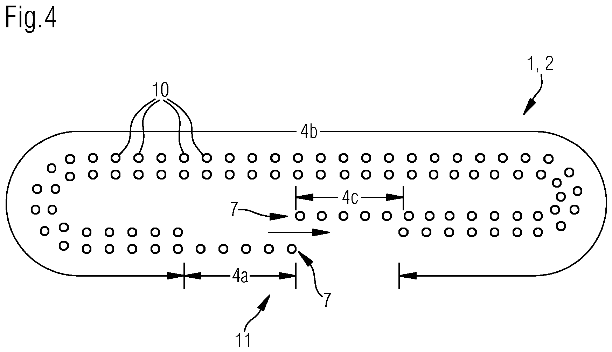

Unter Bezugnahme auf Fig. 4 wird nun ein Ausführungsbeispiel einer erfindungsgemäßen Bespannung 2 beschrieben. Gleiche Komponenten sind mit gleichen Bezugszeichen wie in den vorstehend beschriebenen Ausführungsformen versehen. Auf eine wiederholende Beschreibung bereits bekannter Komponenten kann daher verzichtet werden. In Fig. 4 ist eine seitliche stark schematisierte Ansicht einer erfindungsgemäßen Bespannung 2 dargestellt, wobei zur besseren Übersichtlichkeit und Erläuterbarkeit die Kettfäden nicht mehr dargestellt sind, jedoch die Schussfäden nun allgemein mit 10 bezeichnet und in der Darstellung gemäß Fig. 4 in seitlicher Aufsicht bzw. geschnitten dargestellt sind.

In dem in Fig. 4 dargestellten Ausführungsbeispiel sind die Abschnitte des Flachgewebes 1 von ihren Abmessungen anders verteilt als in den oben beschriebenen Ausführungsbeispielen. Die Abschnitte 4a und 4c beschränken sich nunmehr auf die Bereiche, welche die Enden 7 des Flachgewebes 1 bilden, welche später zusammengeführt und ggf. verbunden werden. Ist nun, wie in Fig. 4 stark schematisiert dargestellt, der Bereich 4b zweilagig ausgebildet und die angrenzenden kurzen Bereiche 4a und 4c einlagig, wird durch Übereinanderlegen der Bereiche 4a und 4c auch dort ein zweilagiges Gewebe gebildet, so dass ein dadurch entstehender Verbindungsbereich 11 nahezu identisch in seinen Eigenschaften wie der Rest der Bespannung 2 ist. Dieses Ausführungsbeispiel stellt somit einen Sonderfall des weiter oben verallgemeinerten Prinzips dar. Hier ist insbesondere die Möglichkeit gegeben, die beiden Enden 7 durch einfaches Aufeinanderlegen zur Deckung zu bringen und anschließend z.B. durch Kleben oder Verschweißen zu verbinden. Durch eine geeignete Wahl der Länge der Enden 7 in Maschinenrichtung gesehen kann eine Lastaufteilung auf einen relativ großen Bereich erfolgen, der nur wenig Klebstoff oder sonstige Einwirkung wie Laser oder Ultraschall zum Verschweißen erfordert, so dass das Eigenschaftsprofil im Nahtbereich nahezu identisch zum Rest der Bespannung ist. Dies ist vorteilhaft in Bezug auf die verminderte Markierungsneigung und der dadurch erzielten verbesserten Qualität der Faserbahn. Die Länge des Verbindungsbereiches 11 kann beispielsweise 50 cm, bevorzugt 20 cm, besonders bevorzugt 5 cm betragen . Sind wie oben beschrieben Stabilisierungsnähte 9 vorgesehen, kann auch in diesem Ausführungsbeispiel ggf. die Verbindung entfallen und die einlagigen Abschnitte 4a, 4c lediglich übereinandergelegt werden.

Die Bildung der Nahtschlaufen 8 kann im Übrigen erfolgen wie weiter oben beschrieben, ohne dass dabei jedoch Rücksicht auf die Übergangsstellen 6 zwischen den Abschnitten genommen werden muss. Es werden einfach nach dem Ablegen des Flachgewebes 1 auf sich selbst und dem Verbinden der Enden 7 des Flachgewebes 1 im Verbindungsbereich 11 nunmehr an den durch das Falten gebildeten Querkanten der Bespannung 2 Schussfäden 10 herausgezogen und dadurch die Nahtschlaufen 8 gebildet, welche wieder ineinandergelegt und durch einen Steckdraht verbunden werden können. Auch das weiter oben erwähnte Einbringen von Stabilisierungsnähten 9 ist möglich.

Die Bespannung 2 gemäß den vorstehend beschriebenen Ausführungsbeispielen kann nun in bekannter Weise mit weiteren Funktionslagen oder mit Stapelfaser-/Vlieslagen versehen werden. Stapelfaser-/Vlieslagen werden hierbei auf die Struktur aufgelegt und mit Hilfe einer Vernadelungsstrecke in der Grundstruktur verankert, indem die Fasern der Stapelfaser-/Vlieslagen mittels Nadeln mit Widerhaken durch die Struktur hindurchgezogen werden. Durch die Vermeidung des Moire-Effektes können auch hier bessere Resultate vor allem in Hinblick auf geringeren Faserverlust bei der Verankerung der Fasern erzielt werden. Auch weitere Funktionslagen wie beispielsweise Polyurethanfolien können auf die Struktur aufgebracht und mit dieser verbunden werden. Ebenfalls möglich ist die Einbringung weiterer Lagen, welche beispielsweise als Gelege oder Gewirke oder auch in Form weiterer Gewebelagen ausgebildet sein können. Zusätzliche Lagen können dabei auf einer der Faserbahn zugewandten Seite der Bespannung 2 angebracht werden, es ist jedoch auch möglich, die zusätzlichen Lagen als Inlays vor dem Flachlegen zwischen die beiden Lagen des Flachgewebes 1 einzulegen und in einem Fixierungsprozess wie beispielsweise Vernadeln, Kleben oder Aufschweißen zu fixieren.

Die Erfindung ist dabei nicht auf die Anwendung in Pressfilzen begrenzt. Derartige Bespannungen 2 können auch in anderen Positionen in Faserbahnmaschinen zum Einsatz kommen.

## Patentansprüche

1. Bespannung (2), zur Verwendung in einer Maschine zur Herstellung und/oder Veredelung einer Papier-, Karton-, Tissue- oder Zellstoffbahn, umfassend eine Grundstruktur, welche als ein Stück Flachgewebe (1) ausgebildet ist, welches Flachgewebe (1) durch einander kreuzende Kettfäden (3) und Schussfäden (10) ausgebildet ist, wobei das Stück Flachgewebe (1) mehrere Abschnitte (4a, 4b, 4c) aufweist, welche einstückig miteinander ausgebildet sind, wobei mindestens eine Eigenschaft in einem der Abschnitte (4a, 4b, 4c) unterschiedlich zu der jeweiligen Eigenschaft zumindest eines angrenzenden Abschnitts (4a, 4b, 4c) ist, wobei das Stück Flachgewebe drei aufeinanderfolgende Abschnitte (4a, 4b, 4c) aufweist, welche sich in einer Maschinenrichtung der Bespannung (2) gesehen hintereinander erstrecken, wobei ein erster Abschnitt (4a) von einem zweiten Abschnitt (4b) gefolgt ist, welcher von einem dritten Abschnitt (4c) gefolgt ist, wobei die Länge des ersten und des dritten Abschnitts (4a, 4c) gleich ist, wobei der erste und der dritte Abschnitt (4a, 4c) einlagig gewebt sind und der zweite Abschnitt (4b) zweilagig gewebt ist, und wobei der erste und der dritte Abschnitt (4a, 4c) übereinander angeordnet sind, wodurch auch dort ein zweilagiges Gewebe gebildet wird.

2. Bespannung nach Anspruch 1, **dadurch gekennzeichnet, dass** zumindest eine weitere unterschiedliche Eigenschaft ausgewählt ist aus: Webmuster, Material der Schussfäden (10) und/oder der Kettfäden (3), Materialstärke der Schussfäden (20), Dichte der Schussfäden (10).

3. Bespannung (2) nach einem der vorheirgen Ansprüche, **dadurch gekennzeichnet, dass** die Stärke der Schussfäden (10) zumindest eines der Abschnitte (4a, 4b, 4c) unterschiedlich zu einer Stärke der Schussfäden (10) zumindest eines anderen der Abschnitte (4a, 4b, 4c) ist.

4. Bespannung (2) nach einem der vorherigen Ansprüche, **dadurch gekennzeichnet, dass** das Material der Schussfäden (10) zumindest eines der Abschnitte (4a, 4b, 4c) unterschiedlich zu einem Material der Schussfäden (10) zumindest eines anderen der Abschnitte (4a, 4b, 4c) ist.

5. Bespannung (2) nach einem der vorherigen Ansprüche, **dadurch gekennzeichnet, dass** die Länge des ersten und des dritten Abschnitts (4a, 4c) weniger als 50cm, bevorzugt weniger als 20 cm, besonders bevorzugt weniger als 5 cm beträgt.

6. Bespannung (2) nach einem der vorherigen Ansprüche, **dadurch gekennzeichnet, dass** die Eigenschaften des ersten Abschnitts (4a) und des dritten Abschnitts (4c) gleich sind.

7. Verfahren zum Herstellen einer Bespannung (2) gemäß einem der vorstehenden Ansprüche, wobei das Verfahren die folgenden Schritte umfasst:
i) Herstellen eines Flachgewebes (1) durch Weben von Abfolgen von drei aufeinander folgenden Abschnitten (4a, 4b, 4c), wobei der erste und der dritte Abschnitt (4a, 4c) einlagig gewebt sind und der zweite Abschnitt (4b) zweilagig gewebt ist,
ii) Ablängen eines Teilstückes des Flachgewebes (1), welches einen erste, einen zweiten und einen dritten Abschnitt (4a, 4b, 4c) umfasst,
iii) Umschlagen des Teilstückes entlang von Übergangsstellen (6) innerhalb des zweiten Abschnitts (4b),
iv) Aufeinanderlegen und zur Deckung bringen des ersten und des dritten Abschnitts (4a, 4c)
v) Ablegen der umgeschlagenen Anteile des Flachgewebes (1) auf sich selbst,
vi) Miteinanderverbinden des ersten und des dritten Abschnitts (4a, 4c).

8. Verfahren nach Anspruch 7, **dadurch gekennzeichnet, dass** das Verbinden durch Kleben, Ultraschallschweißen oder Laserschweißen erfolgt.

9. Verfahren nach Anspruch 7 oder 8, **dadurch gekennzeichnet, dass** das Verfahren weiterhin den Verfahrensschritt des Entfernens von Schussfäden (10) an den Übergangsstellen (6) zur Bildung von Nahtschlaufen (8) umfasst.

10. Verfahren nach Anspruch 9, **dadurch gekennzeichnet, dass** das Verfahren nach dem Entfernen der Schussfäden (10) weiterhin das Einbringen von Stabilisierungsnähten (9) umfasst.

## Claims

1. Fabric (2) for use in a machine for producing and/or finishing a paper, board, tissue or pulp web, comprising a base structure which is formed as a piece of flat woven material (1), which flat woven material (1) is formed by warp threads (3) and weft threads (10) crossing one another, wherein the piece of flat woven material (1) has multiple sections (4a, 4b, 4c) which are formed in one piece with one another, wherein at least one property in one of the sections (4a, 4b, 4c) is different from the respective property of at least one adjacent section (4a, 4b, 4c), wherein the piece of flat woven material has three successive sections (4a, 4b, 4c) which, viewed in a machine direction of the fabric (2), extend one after another, wherein a first section (4a) is followed by a second section (4b) which is followed by a third section (4c), wherein the length of the first and of the third section (4a, 4c) is the same, wherein the first and the third section (4a, 4c) are woven in one layer and the second section (4b) is woven in two layers, and wherein the first and the third section (4a, 4c) are arranged one above the other, by which means a two-layer fabric is also formed there.

2. Fabric according to Claim 1, **characterized in that** at least one further different property is selected from: weaving pattern, material of the weft threads (10) and/or the warp threads (3), material thickness of the weft threads (20), density of the weft threads (10).

3. Fabric (2) according to either of the preceding claims, **characterized in that** the thickness of the weft threads (10) of at least one of the sections (4a, 4b, 4c) is different from a thickness of the weft threads (10) of at least one other of the sections (4a, 4b, 4c).

4. Fabric (2) according to one of the preceding claims, **characterized in that** the material of the weft threads (10) of at least one of the sections (4a, 4b, 4c) is different from a material of the weft threads (10) of at least one other of the sections (4a, 4b, 4c).

5. Fabric (2) according to one of the preceding claims, **characterized in that** the length of the first and of the third section (4a, 4c) is less than 50 cm, preferably less than 20 cm, particularly preferably less than 5 cm.

6. Fabric (2) according to one of the preceding claims, **characterized in that** the properties of the first section (4a) and of the third section (4c) are the same.

7. Method for producing a fabric (2) according to one of the preceding claims, wherein the method comprises the following steps:
i) producing a flat woven material (1) by weaving sequences of three successive sections (4a, 4b, 4c), wherein the first and the third section (4a, 4c) are woven in one layer and the second section (4b) is woven in two layers,
ii) cutting to length a portion of the flat woven material (1) which comprises a first, a second and a third section (4a, 4b, 4c),
iii) turning over the portion along transition points (6) within the second section (4b),
iv) laying the first and the third section (4a, 4c) over each other and making them congruent,
v) depositing the turned-over portions of the flat woven material (1) on itself,
vi) connecting the first and the third section (4a, 4c) to each other.

8. Method according to Claim 7, **characterized in that** the connection is made by adhesive bonding, ultrasonic welding or laser welding.

9. Method according to Claim 7 or 8, **characterized in that** the method also comprises the method step of removing weft threads (10) at the transition points (6) in order to form seam loops (8).

10. Method according to Claim 9, **characterized in that** the method also comprises the introduction of stabilizing seams (9) after the removal of the weft threads (10).

## Revendications

1. Habillage (2) destiné à être utilisé dans une machine de fabrication et/ou de finissage d'une bande de papier, de carton, de papier ouaté ou de cellulose, comportant une structure de base, laquelle est réalisée sous la forme d'une pièce de tissu plat (1), lequel tissu plat (1) est formé par des fils de chaîne (3) et des fils de trame (10) se croisant les uns les autres, la pièce de tissu plat (1) comprenant plusieurs parties (4a, 4b, 4c), lesquelles sont formées d'une seule pièce les unes avec les autres, au moins une caractéristique dans l'une des parties (4a, 4b, 4c) étant différente de la caractéristique respective d'au moins une partie adjacente (4a, 4b, 4c), la pièce de tissu plat comprenant trois parties successives (4a, 4b, 4c), lesquelles s'étendent les unes derrière les autres vues dans le sens machine de l'habillage (2), une première partie (4a) étant suivie d'une deuxième partie (4b), laquelle est suivie d'une troisième partie (4c), la longueur de la première et de la troisième partie (4a, 4c) étant identique, la première et la troisième partie (4a, 4c) étant tissées en une couche et la deuxième partie (4b) étant tissée en deux couches, et la première et la troisième partie (4a, 4c) étant superposées, de sorte qu'un tissu à deux couches y soit également formé.

2. Habillage selon la revendication 1, **caractérisé en ce qu'**au moins une autre caractéristique différente est choisie parmi : dessin d'armature, matériau des fils de trame (10) et/ou des fils de chaîne (3), épaisseur de matériau des fils de trame (20), densité des fils de trame (10).

3. Habillage (2) selon l'une des revendications précédentes, **caractérisé en ce que** l'épaisseur des fils de trame (10) d'au moins l'une des parties (4a, 4b, 4c) est différente d'une épaisseur des fils de trame (10) d'au moins une autre des parties (4a, 4b, 4c).

4. Habillage (2) selon l'une des revendications précédentes, **caractérisé en ce que** le matériau des fils de trame (10) d'au moins l'une des parties (4a, 4b, 4c) est différent d'un matériau des fils de trame (10) d'au moins une autre des parties (4a, 4b, 4c).

5. Habillage (2) selon l'une des revendications précédentes, **caractérisé en ce que** la longueur de la première et de la troisième partie (4a, 4c) vaut moins de 50cm, de préférence moins de 20 cm, de manière particulièrement préférée moins de 5 cm.

6. Habillage (2) selon l'une des revendications précédentes, **caractérisé en ce que** les caractéristiques de la première partie (4a) et de la troisième partie (4c) sont identiques.

7. Procédé de fabrication d'un habillage (2) selon l'une des revendications précédentes, le procédé comportant les étapes suivantes :
i) fabrication d'un tissu plat (1) par tissage de séquences de trois parties successives (4a, 4b, 4c), la première et la troisième partie (4a, 4c) étant tissées en une couche et la deuxième partie (4b) étant tissée en deux couches,
ii) coupe à longueur d'une pièce du tissu plat (1), laquelle comporte une première, une deuxième et une troisième partie (4a, 4b, 4c),
iii) rabat de la pièce le long de points de transition (6) à l'intérieur de la deuxième partie (4b),
iv) superposition et mise en coïncidence de la première et de la troisième partie (4a, 4c),
v) dépôt des portions rabattues du tissu plat (1) sur elles-mêmes,
vi) connexion l'une à l'autre de la première et de la troisième partie (4a, 4c).

8. Procédé selon la revendication 7, **caractérisé en ce que** la connexion s'effectue par collage, soudage par ultrasons ou soudage laser.

9. Procédé selon la revendication 7 ou 8, **caractérisé en ce que** le procédé comporte en outre l'étape de procédé d'enlèvement de fils de trame (10) aux points de transition (6) pour la formation de boucles de couture (8) .

10. Procédé selon la revendication 9, **caractérisé en ce que** le procédé comporte, après l'enlèvement des fils de trame (10), en outre l'introduction de coutures de stabilisation (9).
